Europäisches Patentamt

European Patent Office

Office européen des brevets

(19)

(11) EP 1 484 621 A1

## (12) EUROPEAN PATENT APPLICATION
published in accordance with Art. 158(3) EPC

(43) Date of publication:
08.12.2004 Bulletin 2004/50

(21) Application number: 03705370.9

(22) Date of filing: 20.02.2003

(51) Int Cl.⁷: $G02B\ 1/04$, G02B 3/00

(86) International application number:
PCT/JP2003/001888

(87) International publication number:
WO 2003/071314 (28.08.2003 Gazette 2003/35)

(84) Designated Contracting States:
AT BE BG CH CY CZ DE DK EE ES FI FR GB GR
HU IE IT LI LU MC NL PT SE SI SK TR

(30) Priority: 20.02.2002 JP 2002042949

(71) Applicant: DAI NIPPON PRINTING CO., LTD.
Tokyo 162-8001 (JP)

(72) Inventor: DOI, Yasuhiro
Dai Nippon Printing Co., Ltd.
Tokyo 162-8001 (JP)

(74) Representative: Bagger-Soerensen, Birgitte et al
Internationalt Patent-Bureau,
23, Hoje Taastrup Boulevard
2630 Taastrup (DK)

## (54) OPTICAL ELEMENT-USE RESIN COMPOSITION, OPTICAL ELEMENT, AND PROJECTION SCREEN

(57) There are provided an optical element resin composition, an optical element, and a projection screen that, even upon the application of pressure to the surface of a lens in the optical element, do not cause collapse of the shape of the lens and, even when the shape of the lens has been collapsed, enable the collapsed shape to be immediately returned to the original shape, and can ensure good quality (that is, have high friction resistance). The optical element resin composition is a resin composition for constituting an optical element, which has a glass transition temperature of 5 to 36°C and an equilibrium modulus of elasticity of 0.859 $\times\ 10^8$ to $3.06 \times 10^8$ dyne/cm$^2$.

FIG. 1

EP 1 484 621 A1

**Description**

TECHNICAL FIELD

The present invention relates to a resin composition for constituting an optical element and more particularly to an optical element resin composition and an optical element comprising said resin composition that, even upon the application of pressure to the surface of a lens in the optical element, do not cause collapse of the shape of the lens and, even when the shape of the lens has been collapsed, enable the collapsed shape to be immediately returned to the original shape, and can ensure good quality (that is, have high friction resistance).

BACKGROUND ART

An optical element has a construction comprising a transparent substrate and a resin composition layer, which has been shaped into an optical shape, provided on the transparent substrate, or a construction comprising a resin composition layer in which an optical shape has been provided directly on the resin composition layer without the provision of any substrate. There are various optical shapes which may be provided on the surface of an optical element. In general, however, a construction, in which fine lens-shaped projection parts have been arranged, that is, a large number of concaves and convexes are present when viewed as a whole of an optical element, is in many cases adopted.

In some cases, a plurality of optical elements are used in combination. When such lenses are used in combination, from the viewpoints of maximizing the optical effect of the optical elements and protecting the lens surface of the optical elements, a method is often adopted in which the optical elements are brought into intimate contact with each other in such a manner that the surface of one of the optical elements faces the surface of the other optical element. A most typical example of this combination is a combination of a Fresnel lens with a lenticular lens for use in projection screens. The Fresnel lens has the function of collimating projected light to vertically correct the light. On the other hand, the lenticular lens has the function of horizontally diffusing the light collimated by the Fresnel lens. In this type of projection screen, in use, the Fresnel lens (circular Fresnel convex lens) on its light outgoing surface side is generally brought into intimate contact with the lenticular lens on its light incident surface side.

In this way, when lens surfaces of optical elements are brought into intimate contact with each other, since both the surfaces have concaves and convexes, the surface shape of one of the optical elements affects the surface shape of the other optical element and vice versa. For example, in the above example, the section of the Fresnel lens surface is in a saw blade-like concave-convex form having a pointed apex, while the section of the lenticular lens surface is in an arch-like concave-convex form which is rounded and raised, for example, is semicircular or semielliptical. When the Fresnel lens sheet having the above sectional form is brought into intimate contact with the lenticular lens sheet having the above sectional form, the raised top of the lenticular lens comes into contact with the pointed apex of the Fresnel lens. In this case, the contact pressure developed at that time causes deformation of the shape of the lenticular lens and/or the shape of the Fresnel lens. That is, the shape of concaves and convexes on the surface of the lens is deformed, resulting in collapsed lens.

The problem of the deformation of the lens shape can be solved by enhancing the hardness of the resin constituting the lens. Merely enhancing the hardness of the resin, however, disadvantageously renders the resin fragile and leads to a problem of increased susceptibility to breaking of the lens during handling or cutting. For this reason, the resin constituting the lens should have, on one hand, high hardness and, on the other hand, a certain level of flexibility.

The hardness of the cured resin is generally related to glass transition temperature. When the glass transition temperature is excessively low, the rubber elasticity lowers and, in this case, upon the application of pressure, the resin undergoes plastic deformation. In general, when the resin has a certain level of crosslinking density, rubber elasticity develops even in the case of low glass transition temperature and, in this case, even upon exposure to pressure, plastic deformation does not occur. In the resin composition for an optical element, however, a stiff chain of a benzene ring or an alicyclic group should be introduced into the molecular chain for refractive index improvement which is an essential requirement to be satisfied. This disadvantageously leads to increased glass transition temperature. Therefore, it is very difficult to lower the glass transition temperature to a temperature around room temperature while maintaining the desired refractive index. On the other hand, an excessively high glass transition temperature is advantageous from the viewpoint of improving the refractive index, but on the other hand, the rigidity of the resin becomes so high that the internal stress (strain) is likely to remain unremoved. Therefore, in the case of a lens sheet having a structure comprising a resin composition layer laminated onto a substrate, the relaxation of the lens resin causes warpage of the lens sheet.

On the other hand, when a material containing a halogen compound such as a bromine compound or sulfur is used, the refractive index can be enhanced without use of any aromatic compound such as a compound having a benzene ring and, at the same time, the material properties can be successfully controlled. From the viewpoint of environmental load, however, it is preferred not to use bromine.

Further, when, for example, a projection screen comprising a combination of two optical elements is transported, the optical elements are rubbed against each other for a long period of time while dynamic sliding of the optical elements against each other. Therefore, there is a fear of producing scratches on the surface of the optical elements. Further, during transportation or storage or during temporary storage before the step of incorporation in TV sets, projection screens or the like are put on top of each other. In this case, since the lens surface is in a high pressure applied state for a long period of time, lenses are likely to deform due to creeping, leading to a fear of collapse of the lens. Furthermore, the internal temperature of transportation containers or holds sometimes rises and sometimes falls. Therefore, since the optical elements are placed under high temperature environment or low temperature environment, the surface of the optical elements is likely to be deformed or scratched.

Japanese Patent Laid-Open No. 010647/1998 discloses a lens sheet comprising a cured product of an actinic radiation curable resin in which the modulus of elasticity of the lens sheet is in the range of 80 to 20000 kg/cm$^2$ at -20 to 40°C. The claimed advantage of this lens sheet is excellent shape stability over a wide temperature range and retention of optical characteristics.

Japanese Patent Laid-Open No. 228549/2001 proposes a resin composition for a lens sheet in which the dissipation rate (tan δ) of the dynamic modulus of elasticity of the ionizing radiation cured resin constituting the lens is brought to a predetermined range by taking into consideration the case where dynamic force is applied to the lens sheet. The claimed advantage of this resin composition is not to accumulate strain and to have excellent flexibility and restorability.

However, it should be noted that the modulus of elasticity adopted in Japanese Patent Laid-Open No. 010647/1998 is one specified in JIS K 7113. Since this modulus of elasticity is tensile modulus of elasticity for a flat film, it is difficult to say that the modulus of elasticity in this publication reproduces the modulus of elasticity under actual service conditions of the cured resin constituting the optical element in which the cured resin undergoes compressive force.

Collapse of the lens caused by the application of pressure to the lens surface for a long period of time can be easily avoided by using, as the material for the lens of the optical element, a curable resin material which upon curing can be brought to a highly hard and rigid cured resin. Since, however, the rigidity of the resin is high, when the optical elements are placed under low temperature environment during transportation, one of the lenses in contact with each other is likely to damage another lens in contact with this lens. Further, when high pressure is applied to the optical element for a long period of time in such a state that the two lenses are stacked on top of each other (lateral loading), upon the application of energy on a level beyond elastic deformation region to the lenses, the resin undergoes plastic deformation, resulting in collapsed lenses.

Furthermore, when the crosslinking density, modulus of elasticity and the like of the resin composition constituting the Fresnel lens are excessively high, the internal strain added in the production process is increased. In the Fresnel lens, the thickness of the lens sheet is preferably small from the viewpoint of suppressing a double image. In this thin lens sheet, since the substrate is dragged by the influence of internal strain of the lens layer part, a proper curvature required of the lens cannot be disadvantageously held. Thus, in a lens sheet having a relatively wide area, the use of a material having a low modulus of elasticity is preferred from the viewpoint of reducing the internal strain of the lens layer.

Further, in such a state that the concaves and convexes on the surface of the Fresnel lens have been deformed and collapsed by contact pressure, the application of vibration to the Fresnel lens increases the frictional force (static frictional force) between both the lenses, induces stick-slip motion, and is likely to cause friction. In order to solve this problem, for example, Japanese Patent Laid-Open Nos. 384258/2000 and 59535/1997 describe that enhancing the restoring force of a resin composition for a lens is preferred for Fresnel lens applications. In these publications, however, there is no specific description on the effect attained and on the numerical value of the restoring force required.

Accordingly, an object of the present invention is to provide an optical element resin composition, an optical element, and a projection screen that, even upon the application of pressure to the surface of a lens in the optical element, do not cause collapse of the shape of the lens and, even when the shape of the lens has been collapsed, enable the collapsed shape to be immediately returned to the original shape, and can ensure good quality (that is, have high friction resistance).

DISCLOSURE OF THE INVENTION

As a result of extensive and intensive studies with a view to solving the above problems of the prior art, it was found that friction resistance can be improved by imparting elastomeric restorability (restoring force, restoring speed) to a cured resin having predetermined optical characteristics and that, even when a resin composition, into which a large amount of a benzene ring has been introduced, has been used for desired refractive index development purposes, there is a property region which develops rigidity and rubber elasticity. Specifically, it was found that the above problems of the prior art can be solved by using, in an optical element, a resin composition, in which the glass transition temperature, the coefficient of friction, the equilibrium modulus of elasticity, the storage modulus, the loss tangent, the restoring speed, and the deformation level are in predetermined respective ranges and, in addition, there are a predetermined relationship between elastic deformation rate and compression modulus of elasticity and a predetermined relationship between compression modulus of elasticity and creep deformation.

Thus, according to the present invention, there is provided an optical element resin composition having a glass transition temperature (hereinafter referred to as "Tg") of 5 to 36°C and an equilibrium modulus of elasticity of $0.859 \times 10^8$ to $3.06 \times 10^8$ dyne/cm$^2$.

Preferably, the above optical element resin composition satisfies a relationship represented by formula We > -0.0189E + 34.2 wherein We represents elastic deformation rate in %; and E represents compression modulus of elasticity in Mpa. The use of this resin can suppress the collapse of lenses caused by mutual compression of the lens surfaces in the projection screen. Specifically, the optical element using the resin composition according to the present invention, even when brought into intimate contact with a warped lenticular lens, does not undergo collapse of the concave/convex parts on its lens surface. In a region of We ≤ -0.0189E + 34.2, restorability from collapse of the lens surfaces caused by mutual compression is poor.

More preferably, the resin composition satisfies a relationship represented by formula V ≥ 0.178DM - 0.852 wherein V represents restoring speed in μm/sec; and DM represents maximum deformation level in μm. Satisfying a relationship represented by formula V ≥ 0.112DM - 0.236 is particularly preferred. When the resin composition used satisfies the above relationship between the maximum deformation level and the restoring speed, the collapse of lenses caused upon contact with a lenticular lens can be suppressed. Further, specifying the relationship between the deformation level of the resin and the speed of restoration of the deformation so as to fall in a predetermined range can reduce friction between lenses caused by periodical impact during vibration of the lenses.

In a preferred embodiment of the present invention, the optical element resin composition satisfies a relationship represented by formula V ≥ 0.858R - 0.644 wherein V represents restoring speed in μm/sec; and R represents residual deformation level in μm. When a resin composition, in which the relationship between the restoring speed and the residual deformation level satisfies a requirement of the above relational expression, is used, the collapses of the lenses caused by mutual compression of the lens surfaces can be suppressed. Specifically, a Fresnel lens can be provided which, even when brought into intimate contact with a warped lenticular lens, does not undergo collapse of the lens. Further, in this Fresnel lens, even when once the lens is deformed as a result of stacking in a combination with a lenticular lens, upon release of the load (upon incorporation in TV), the lens shape can be restored to the original shape.

Further, preferably, the optical element resin composition satisfies a relationship represented by formula (-0.026E + 3) < C < (-0.02E + 63) wherein C represents creep deformation rate in %; and E represents compression modulus of elasticity in Mpa. The use of this resin can suppress the collapse of lenses caused by mutual compression of the lens surfaces in a projection screen. Specifically, a Fresnel lens can be provided which, even when brought into intimate contact with a warped lenticular lens, does not collapse. In a region of C > -0.02E + 63 or C < -0.026E + 3, any lens having proper creep resistance with respect to collapses of lenses caused by mutual compression of the lens surfaces cannot be provided.

In a particularly preferred embodiment, the optical element resin composition according to the present invention has a storage modulus of not more than $2.96 \times 10^{10}$ dyne/cm$^2$ at -20°C and a loss tangent of not less than 0.02 at -20°C. In the resin having the above property values, the quantity of energy stored in the vibration is small, the proportion of loss as thermal energy is high, and, thus, the vibration can easily be relaxed. Therefore, in the lens using this resin, friction caused by dynamic contact between lenses can easily be avoided.

In a preferred embodiment of the present invention, the loss area in a temperature range of -20 to 50°C in a curve for dependency of loss tangent upon temperature is 20°C or above. In particular, the loss area in a temperature range of -20 to 50°C in a curve for dependency of loss tangent upon temperature is preferably 20 to 43.2°C, particularly preferably 20 to 31.7°C. The use of the resin composition having properties falling within the above numerical property value range is advantageous in that, upon exposure to vibration with various frequencies during transportation of the projection screen, the vibrational energy is converted to thermal energy. Therefore, very effective fundamental vibration proof properties can be provided. In the case of a resin composition having a large loss area, since polyrelaxation of molecular motion occurs, the restorability of the resin can be improved and, thus, the deformation of the resin caused by the external pressure can be reduced over a wide temperature range.

More preferably, the resin composition has a coefficient of dynamic friction of 0.07 to 0.15 at room temperature. When the resin composition having this property value is used, the occurrence of scratches can be effectively prevented during transportation, particularly during transportation under environment of a low temperature around -20°C. Here room temperature refers to 25°C. However, it should be noted that, at 20°C, the value of the coefficient of dynamic friction remains substantially unchanged. When the value of the coefficient of dynamic friction exceeds 0.15, the occurrence of scratches during transportation at a temperature around -20°C cannot be effectively prevented. On the other hand, when the value of the coefficient of dynamic friction is less than 0.07, in order to impart slipperiness, the amount of silicone or the like added should be considerably increased. The increase in the silicone content disadvantageously deteriorates the adhesion of the resin composition to the substrate.

In another aspect of the present invention, there is provided an optical element comprising the above optical element resin composition.

Preferably, the optical element has a refractive index of not less than 1.52, and this optical element can be used as a Fresnel lens sheet.

In still another aspect of the present invention, there is provided a projection screen comprising the above optical element and a lenticular lens.

## BRIEF DESCRIPTION OF THE DRAWINGS

Fig. 1 is a schematic view of a projection screen comprising an optical element;
Fig. 2 is a schematic view illustrating a curve for dependency of penetration depth upon load;
Fig. 3 is a schematic view showing an indenter action site;
Fig. 4 is a graph showing a PSD waveform used in a vibration test;
Fig. 5 is a schematic view illustrating a curve for dependency of penetration depth upon load;
Fig. 6 is a graph in which the relationship between the glass transition temperature and the equilibrium modulus of elasticity of resin compositions used in Examples and Comparative Examples has been plotted;
Fig. 7 is a graph in which the relationship between the elastic deformation rate and the compression modulus of elasticity of resin compositions used in Examples and Comparative Examples has been plotted;
Fig. 8 is a graph in which the relationship between the compression modulus of elasticity and the creep deformation rate of resin compositions used in Examples and Comparative Examples has been plotted;
Fig. 9 is a graph in which the relationship between the maximum deformation level and the restoring speed of resin compositions used in Examples and Comparative Examples has been plotted; and
Fig. 10 is a graph in which the relationship between the residual deformation level and the restoring speed of resin compositions used in Examples and Comparative Examples has been plotted.

## BEST MODE FOR CARRYING OUT THE INVENTION

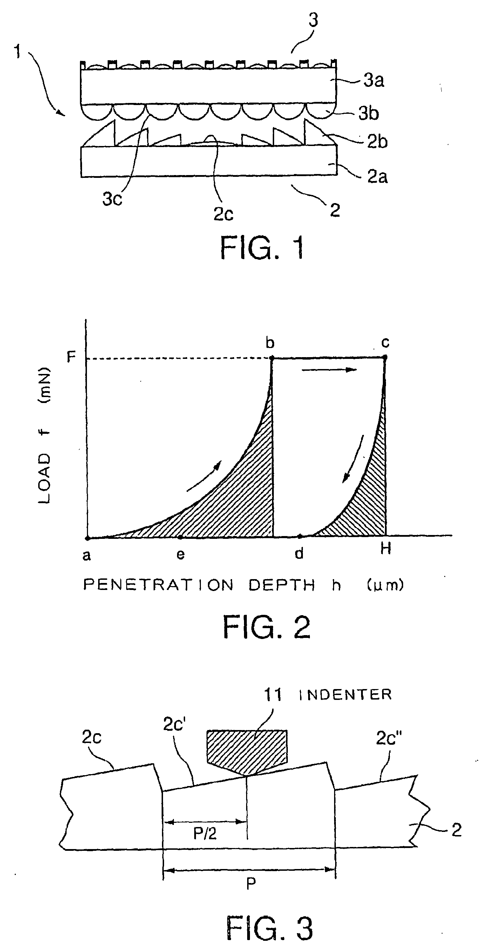

Fig. 1 is a typical diagram showing a projection screen using a Fresnel lens sheet as a typical optical element according to the present invention. In a projection screen 1, a Fresnel lens sheet 2 and a lenticular lens sheet 3 are provided and brought into intimate contact with each other so that a lens surface 2c of the Fresnel lens sheet 2 faces a lens surface 3c of the lenticular lens sheet 3. In Fig. 1, for both the sheet 2 and the sheet 3, a separate substrate is provided. Specifically, a lens layer 2b is stacked on a substrate 2a, and a lens layer 3b is stacked on a substrate 3b. In each of the lens sheets, however, instead of the construction in which the substrate and the lens layer are provided separately from each other, a construction may be adopted in which the substrate is provided integrally with the lens layer. Further, as shown in Fig. 1, the lenticular lens sheet 3 may have microlenticular lenses and projections and black stripes on its side remote from the Fresnel lens sheet 2.

In addition to the lenticular lens and the Fresnel (convex) lens described in conjunction with Fig. 1, lenses having any optical shape such as Fresnel concave lenses, prisms, or mesh lenses may also be provided in the optical element. Further, one optical element may have, on its both sides, optical element surfaces having identical or dissimilar optical shapes.

In the present invention, the optical element resin composition constituting the whole optical element or, in the case of an optical element comprising a lens layer provided on a substrate, constituting the lens layer is specified by various parameters mentioned below. The optical element comprising the resin composition according to the present invention is typically a Fresnel lens sheet. This optical element, particularly a Fresnel lens sheet, may be used in combination with a lenticular lens sheet to constitute a projection screen. The optical element resin composition referred to herein refers directly to one in the form of a product or refers to one in the form of a thin resin sheet or a lens layer in the case where the resin composition is used for measurement. However, it should be noted that the optical element resin composition embraces uncured compositions satisfying various parameter requirements mentioned below, for example, in a form before product production, or in the form of a thin sheet for measurement purposes.

The optical element resin composition preferably comprises an ionizing radiation curable material composed mainly of an oligomer and/or a monomer of an ionizing radiation curable radically polymerizable acrylate compound or an oligomer and/or a monomer of a cationically polymerizable epoxy compound, a vinyl ether compound, or an oxetane compound and optionally additives for curing such as ultraviolet polymerization initiators and photosensitizers. A mixture of the radically polymerizable compound with the cationically polymerizable compound may also be used.

The additive for curing undergoes decomposition during polymerization of the resin composition. Therefore, a decomposition product thereof remains after curing the resin.

On the other hand, when a maleimide derivative is used instead of the polymerization initiator, curing occurs with high efficiency. Therefore, in this case, a residue is less likely to remain, and, thus, this method is more preferred from the viewpoints of energy saving and environmentally friendly nature. Further, a thermoplastic resin may be incorporated with a view to improving the properties of the product.

Further, the radically polymerizable resin preferably contains a thiol compound. In this case, continuous growth and chain growth polymerization take place in cooperation by a thiol-ene reaction. Therefore, the homogeneity of the phase within the cured film is improved, and material properties such as toughness, flexibility, and hardness and adhesion to the substrate are improved.

The optical element resin composition may contain various additives which can be added in the production of ordinary sheet-like or plate-like resin products. Further, the optical element resin composition may contain light diffusing agents, colorants and the like from the viewpoint of improving optical properties of the optical element.

Since the contact pressure developed by the warpage of the lenticular lens affects compression load to the Fresnel lens, specifying the compression modulus of elasticity has great significance. Additionally specifying the creep deformation rate under compression loading is very effective as means for reducing the lens collapse phenomenon of the Fresnel lens caused by applying a load for a long period of time (see Japanese Patent Application No. 126650/2001). The above means is suitable for materials having high rigidity and high energy elasticity, but on the other hand, the application of the above means to materials having entropy elasticity such as rubber elasticity is difficult. The resin having rubber elasticity is excellent in low-temperature hardness, vibration damping properties, and restorability after the application of high pressure for a long period of time. However, merely specifying creep deformation rate and compression modulus of elasticity as properties of this resin does not suffice. In the present invention, it was found that, when the resin composition has a predetermined compression modulus of elasticity and a predetermined elastic deformation rate, materials having excellent restorability from lens deformation caused by contact pressure can be realized. Further, it was clarified that the crosslinking density causes a significant difference in restorability.

Specifically, in the resin composition according to the present invention, when a material having a low glass transition temperature is used, the resin can be converted from a glass region to a rubber region at the service temperature of the lens to develop a predetermined level of elastic deformation (rubber elasticity). What is most preferred for lowering the creep deformation level to impart a certain level of elastomeric restoring force is to optimize the crosslinking density of the resin as the material used to provide a network structure with a homogeneously dispersed proper network.

Parameters which specify the optical element resin composition according to the present invention are (1) glass transition temperature, (2) equilibrium modulus of elasticity, (3) elastic deformation rate, (4) compression modulus of elasticity, (5) restoring speed, (6) maximum deformation level, (7) residual deformation level, and, if necessary, further (8) creep deformation rate, (9) storage modulus, (10) loss tangent, and (12) coefficient of dynamic friction.

Among the above parameters, parameters (1), (2), (9), and (10) can be calculated based on the results of the measurement of dynamic viscoelasticity, and parameters (3) to (8) can be calculated based on the results of measurement with a microhardness tester. These parameters will be described below.

In the measurement of the dynamic viscoelasticity, a resin sheet of an optical element resin composition having predetermined thickness is prepared as a sample. When an ultraviolet curable resin composition is used to prepare the resin sheet, the resin is cured by ultraviolet irradiation. The storage modulus and the loss tangent are measured while varying the temperature with a dynamic viscoelastometer and applying vibration at constant cycle periods in a major axis direction of the sample. Based on the relationship between the storage modulus and the temperature, the storage modulus at a predetermined temperature and the equilibrium modulus of elasticity in an equilibrium state are determined. Based on the relationship between the loss tangent and the temperature, the loss tangent at a predetermined temperature is calculated.

The storage modulus is related to the ability of elastically storing energy with respect to strain applied to the material and is a kind of dynamic properties and a measure of elastic properties of the material (resin composition). The loss tangent is determined based on the loss modulus/storage modulus. The loss modulus represents viscous properties of the material (resin composition), is related to the quantity of energy with respect to dissipation, as heat, of the material during deformation, and is a measure of relaxation of vibration energy. At a temperature at or above maximum loss tangent temperature, polymer segments of the resin are in a fully relaxed state, and the storage modulus component at that time is derived from crosslink points as linking parts. Therefore, the equilibrium modulus of elasticity as the storage modulus in the rubber elasticity region is related to the crosslinking density of the resin. The temperature corresponding to the maximum value of the loss tangent in a curve for the dependency of loss tangent upon temperature is said to represent phase transition of the material and approximately corresponds to the glass transition temperature which represents transition from glass region to rubber region. The glass transition temperature can also be measured by DSC (differential scanning calorimetry) in which the difference in energy input between the material and a reference material is measured as a function of the temperature (a DSC curve or a DTA curve) while varying the temperature of the material and the reference material and the phase transition temperature is determined from the endothermic behavior.

Further, detailed information on structures and properties of polymeric materials such as micro-Brownian motion as motion of the molecular chain, rotation of side chain, and rotation of terminal groups, and, further, phase transition of homopolymers can also be obtained by dielectric relaxation measurement over a wide temperature range and a wide frequency range. Therefore, the above information may be reflected into the design of resins. Specifically, as described in Japanese Patent No. 3318593, in order to absorb vibration by conversion of vibration energy to thermal energy, the evaluation of the orientation of dipoles caused by an electric field is important, and the resin can easily be designed by taking mechanical relaxation derived from dielectric relaxation into consideration.

The cured product of the resin composition for constituting the optical element according to the present invention has a glass transition temperature of 5.0 to 36.0°C and an equilibrium modulus of elasticity of $0.859 \times 10^8$ to $3.06 \times 10^8$ dyne/cm$^2$. In the optical element using this resin composition, even upon the application of pressure to the lens sheet surface, the lens surface is not collapsed and good quality can be ensured.

Even when the glass transition temperature of the cured product is in the above-defined range, if the equilibrium modulus of elasticity exceeds $3.06 \times 10^8$ dyne/cm$^2$, then the crosslinking density is increased. Therefore, in this case, the motion of the molecular chain which develops a viscous structure is frozen, resulting in deteriorated restorability of the resin. That is, the resin is rendered rigid and is rendered less susceptible to deformation by increasing the crosslinking density of the molecular chain. Merely increasing the crosslinking density, however, is disadvantageous in that, when the resin is once deformed by a large load, the resin is less likely to be returned to the original state. For this reason, the resin having an equilibrium modulus of elasticity above value can withstand neither contact pressure applied in the superposition of two lens sheets to form a projection screen nor high pressure applied in sheet loading at the time of transportation of a package of lens sheets and at the time of assembling of the screen in TV.

Further, for the cured product of the resin according to the present invention, the glass transition temperature representing the transition from glass region to rubber region is around room temperature (25°C), and, thus, the cured product of the resin is highly flexible at the temperature of environment in which the sheets are usually handled. When a resin composition having the above glass transition temperature and the equilibrium modulus of elasticity is used, a modulus of elasticity, which is considerably above that of the conventional resin for an optical element, can be ensured while maintaining the flexibility of the molded product of the resin. This resin composition can be provided by optimizing the crosslinking density to realize a homogeneously dispersed network structure in the molecular structure of the resin. The crosslinking density can be optimized by (i) regulating the mixing ratio of monofunctional, bifunctional, trifunctional, and higher polyfunctional monomers, (ii) selecting monomers having functional groups having structures contributable to toughness, for example, ethylene oxide-modified monomers, propylene oxide-modified monomers, glycolic monomers such as diethylene glycol diacrylate or polyethylene glycol diacrylate, and diol monomers such as 1,4-butanediol diacrylate or 1,6-hexanediol diacrylate, and regulating their mixing ratio and molecular weight, or (iii) regulating the mixing ratio or molecular weight of epoxy (meth)acrylate oligomers or urethane (meth)acrylate oligomers. In the case of radical polymerization, in order to avoid the presence of double bond remaining unreacted due to its high reaction rate, from the viewpoint of homogeneous dispersion of the network structure, care should of course be taken when using a penta-, hexa- or higher functional monomer.

Further, in order to realize a homogeneous network structure, the length of the molecular chain between crosslink points should also be taken into consideration. Specifically, attention should also be paid to the regulation of the repetition of polyether chains and polyester chains in a urethane oligomer, the regulation of the repetition of ethylene oxide chains, propylene oxide chains or the like in monomers, and the molecular weight distribution and mixing ratio thereof.

Rubber-like materials generally comprise long-chain molecules, and the structure thereof is such that the long-chain molecules are mutually bonded through weak van der Waals force (secondary bonding force) and, further, bridges (crosslinks) formed by valence bonds are provided in places between long-chain molecules. Each part of chain molecules of rubber has a gap (space) inherent in rubber, and movement of the long-chain molecule to the gap causes molecular motion. In this case, however, since the molecular chain is fixed by the crosslink point, free deformation of the whole molecular chain by macro-Brownian motion is retricted. On the other hand, when the crosslink point is absent, in a temperature region above the glass transition temperature, the elasticity is lost by the macro-Brownian motion of the molecular chain. However, when a large number of crosslink points are present and bonding force between chains is excessively strong, disadvantageously, irregular motion in a relatively small area of each part of chain molecules (micro-Brownian motion) is also suppressed, making it impossible to develop rubber elasticity. That is, what is important for development of rubber elasticity is to promote micro-Brownian motion while suppressing macro-Brownian motion. The crosslinking density should be regulated for the suppression of macro-Brownian motion. In this case, homogenous distribution of the crosslink points is also important. On the other hand, in order to promote micro-Brownian motion, the glass transition temperature should be regulated. A highly resilient high-refractive index curing resin, which is less likely to cause collapse of the screen, can be provided by designing materials while taking into consideration a temperature region in which the projection screen is usually employed. That is, in the present invention, an optical element resin composition having flexibility (rubber elasticity) suitable for use in a projection screen is provided by designing materials from the viewpoints of the crosslinking density and the glass transition temperature based on the above molecular study.

The resin composition according to the present invention preferably satisfies a relationship represented by formula We > -0.0189E + 34.2 wherein We represents elastic deformation rate in %; and E represents compression modulus of elasticity in Mpa.

Further, the resin composition according to the present invention preferably satisfies a relationship represented by (-0.026E + 3) < C < (-0.02E + 63) wherein C represents creep deformation rate in %; and E represents compression modulus of elasticity in Mpa.

The elastic deformation rate (elastic work level), the compression modulus of elasticity, and the creep deformation rate will be described. These material property parameters can be calculated by applying a universal hardness test with a microhardness meter. Specifically, the load applied by an indenter is gradually increased to a predetermined value and is then gradually decreased to determine a curve for the dependency of penetration depth upon load, and the curve thus obtained is analyzed for calculation of the property parameters.

Regarding the optical element resin composition, the whole molded product of the resin should be flexible and restorable at room temperature, and deformation caused by pressure cannot be fully relaxed by a part of the molded product of the resin (a part of lens). That is, in the projection screen, the Fresnel lens and the lenticular lens are in partial contact with each other, and the whole assembly is supported by the contact points. In general, in order that the whole molded product of the resin has flexibility and restorability from the viewpoint of returning the deformed state to the original undeformed state, the whole cured product should have a structure capable of relaxing dynamical deformation, and, at the same time, this structure should be present in the matrix so that the plastic component is not affected by external force. Accordingly, any different index of the flexibility and the restorability is necessary. In the present invention, the elastic deformation rate as a parameter of the elastic work level is used as a parameter for the flexibility and the restorability.

Material property values such as elastic deformation rate can be evaluated by a universal hardness test. Specifically, a measuring method for determining universal hardness is applied. In this test, an indenter is indented into the surface of the sample, and, in a load applied state, the depth of indentation is directly read. Specifically, various properties of the resin film can be determined by gradually increasing or decreasing the load to a set value rather than the measurement of the depth of indentation by the indenter for only one point. (See "Evaluation of material property values by the universal hardness test", Zairyo Shiken Gijutsu, Vol. 43, No. 2, April, 1998).

Further, in the present invention, the collapse of lenses caused by contact pressure is reduced by using a resin composition in which the relationship between the elastic deformation rate and the modulus of elasticity of the resin composition falls within a predetermined range.

Furthermore, in the present invention, it is important for the restoring speed of the resin composition to have a predetermined relationship with the maximum deformation level of the resin composition.

The restorability can be evaluated in terms of elastic deformation rate. In the elastic deformation rate, however, evaluation on an absolute scale depending upon an actual deformation level cannot be provided. On the other hand, evaluating the level of storability from a certain deformation level based on the maximum deformation level and the restoring speed is very important. Specifically, in the case of a small modulus of elasticity, if the restoring speed is high despite a high level of deformation, then the proportion of the elastic work is high and the restorability is high. On the other hand, in the case of large modulus of elasticity, since the deformation is small and energy is stored, the proportion of the elastic work is high. In this case, however, when the restoring speed is low, the restorability is low. Therefore, in addition to the evaluation of the elastic deformation rate, the maximum deformation level and the restoring speed should be added as an index to perform evaluation on an absolute scale. Thus, the level of the deformation of lens, which develops optical defects, or the level of the restorability which can avoid the observation of the optical defects despite deformation can be clearly evaluated by evaluating the maximum deformation level.

In projection screen applications, the highest restorability is required in the case where a high load is applied to lenses, for example, by lateral loading of lenses during the production of the projection screen. In this case, in the stage of design, estimation should be carried out on the level of restoration of lens, deformed by the high load, after the release of the load. This estimation can be derived from the relationship of V ≥ 0.112DM - 0.236.

In a projection screen comprising a combination of a lenticular lens with a Fresnel lens, even when the collapse of lens is present at a temperature around room temperature, the collapse of lens is eliminated with the elapse of time. The reason for this is believed as follows. When a warped lenticular lens is forcibly pressed against a flat Fresnel lens, in an early stage, pressure is applied by the warpage of the lens. However, with the elapse of time, creeping permits the lenticular lens to conform to the plane of the Fresnel lens to reduce the contact pressure. The reason for the elimination of the collapse of lens is also considered to rely upon the following mechanism. Specifically, since the thickness of the lenticular lens is small, contact pressure biased, for example, by strains produced at the time of lens setting is sometimes applied. The biased contact pressure is brought to uniform contact pressure by the environmental temperature or humidity or the elapse of time, and, consequently, local pressure is released to restore the resin.

Upon application of vibration to the collapse lenses, friction between the lenses or collision of the lenses against each other increases frictional force (static frictional force), and, thus, abrasion of the lenses is likely to occur. Therefore, it is considered that shape restoration immediately after deformation at the lens contact part can reduce frictional force to reduce lens abrasion. In the present invention, it was found that not only the collapse of the lens but also the lens abrasion can be effectively prevented by preparing the optical element using a resin composition having a predetermined relationship between the restoring speed and the maximum deformation level.

Furthermore, optical defects caused by lens deformation can be suppressed by using a resin composition having a predetermined relationship between the restoring speed and the residual deformation level. That is, defects in the shape of lenses for every load can be avoided by regulating the plastic deformation level. Further, even when a certain level of permanent strain stays in the resin composition, maintaining the restoring speed on a certain level is considered to avoid the collapse of the lens and to suppress optical defects.

Furthermore, when a Fresnel lens is separated from a mold, in some separation direction, shear force acts on the lens due to the positional relationship between the mold and the concave/convex part of the lens. In this case, the frictional force is large at the interface of the mold and the lens, and, upon the application of load, the lens is sometimes deformed. Thus, in some cases, a part of the lens separated from the mold is strained, resulting in optical defects. The use of an external or internal release agent or the like to reduce frictional force at the time of the separation of the lens from the mold is considered effective for reducing the optical defects. Mere use of the release agent, however, cannot cope with various optical element shapes without difficulties. This necessitates the use of a resin which has excellent restorability and is free from permanent strain. In the present invention, the above problem can be solved by using a resin composition satisfying a requirement represented by formula $V \geq 0.858R - 0.644$.

When the residual deformation level is large, external force affects the viscous structure. Therefore, in this case, the restoring speed (restorability) can generally be estimated to be low. In fact, when the residual deformation level is relatively small, the restoring speed is large. Therefore, the deformation of the lens can be suppressed by using a resin having a high restoring speed (high restorability). Even when the resin has a predetermined maximum deformation level and a certain level of restoring speed, in some cases, the residual deformation (permanent deformation) is relatively large. Therefore, it is important to confirm three parameters, i.e., deformation level, restorability level, and residual deformation level. The contact pressure caused by the warpage of the lenticular lens is reduced by creeping of the lens with the elapse of time. However, restoring force of the Fresnel lens resin in the pressure applied state for pressing back the pressure is important for reducing the deformation, and the restoring speed and the residual deformation level representing the restoring force should be discussed.

Further, in the production of projection screen TV (in assembling process), a loading step is carried out in which large-area screens are put on top of each other. Therefore, restorability and permanent deformation rate upon load release from the lateral loading, in which the lenses undergo a high load, should be taken into consideration.

In mass production of projection screen TVs or the like, a large number of sets of a combination of a lenticular lens with a Fresnel lens are stored in a mutually superimposed state. In some relationship between the material of the Fresnel lens and the material of the lenticular lens, the deformation of both the lens sheets should be taken into consideration. For example, when the Fresnel lens is formed of a curing resin while the lenticular lens is formed of a thermoplastic resin, a resin composition having predetermined mechanical properties should be used in consideration of the deformation of the Fresnel lens. Therefore, when the resin composition according to the present invention is used in the Fresnel lens, it can be said that a smaller residual deformation level is more preferred. In the present invention, however, it was found that, even in the case of a resin having a relatively large residual deformation level, when the restoring speed falls within a predetermined range, the collapse of the lens can be suppressed.

Preferably, the optical element resin composition according to the present invention has a storage modulus, as dynamic viscoelasticity, of not more than $2.96 \times 10^{10}$ dyne/cm$^2$ at -20°C and a loss tangent of not less than 0.02 at -20°C. The introduction of a benzene ring into the molecular chain for purposes of enhancing the refractive index of an optical element formed of a cured product of the resin composition renders the resin composition hard and fragile. Even when the resin composition is hard at room temperature, the occurrence of scratches by friction between optical element surfaces can be avoided to a certain extent so far as the modulus of elasticity at a low temperature is low. Further, resistance to friction between optical element surfaces at a low temperature (0°C) or a very low temperature (-20°C) can be imparted by specifying the loss tangent as dynamic viscoelasticity to a predetermined value range, lowering the storage modulus at a low temperature, and imparting slipperiness to the resin composition.

In the formation of a Fresnel lens sheet using a Fresnel mold, when a hard resin is used and the planarity of the mold fabricated by a lathe is good, scratches of the molded product by friction are less likely to occur. On the other hand, when the planarity of the mold is not good, scratches of the molded product by friction are likely to occur. In the resin composition according to the present invention, the loss tangent as the dynamic viscoelasticity is large and not less than 0.02 and the storage modulus is small. Therefore, even when the planarity of the mold is poor and protrusion parts are present, scratches are less likely to occur in the molded product because the energy of impact or vibration in the protrusion parts is dispersed to control the vibration. This is considered attributable to the fact that the vibration transmissibility at the resonance point of the vibration system reduces with increasing the loss tangent value.

Loss modulus of elasticity may be mentioned as a parameter associated with the storage modulus. At a low temperature, increasing the value of the loss modulus of elasticity (increasing the loss tangent at a low temperature) can increase the ability of the material to dissipate vibration as heat and can reduce scratches caused by friction between optical elements at a low temperature. Further, reducing the value of the storage modulus also can reduce scratches caused by friction between optical elements at a low temperature.

When an optical element is formed of a resin having a large loss modulus of elasticity, the viscosity of the structure within the bulk of the material is increased. Therefore, when static external force reaches the structure, plastic deformation is induced and, as a result, collapse of optical element surfaces such as lens surfaces is likely to occur. In the present invention, this problem is solved by using a resin composition having a small storage modulus value.

Further, in the present invention, when the loss area of the loss tangent of the resin composition is in a predetermined value range, lens abrasion caused by dynamic contact between lenses can be reduced because vibration energy can be converted to thermal energy over a wide frequency range. During the transportation of the projection screen, vibration takes place over a wide frequency range of from a low frequency of about 10 Hz to a relatively high frequency of about 100 Hz. In the present invention, it was found that the loss area is preferably large for attaining good energy loss effect over the wide frequency range.

In a curve for the dependency of loss tangent upon temperature, the peak width, that is, the temperature dispersion width represents relaxation of molecular motion. In this case, a larger width means that the multiplicity of the relaxation is larger and viscosity attributable to a restorable structure is more likely to develop. That is, while fully taking crosslinking density into consideration, toughness is imparted to the resin over a wide temperature range to impart restoring force for pressing back the external force to the projection screen over a wide temperature range and consequently to reduce plastic deformation of the lens. Because of the large restoring speed, the effect can also be attained for collapse of lenses in which a large load is released.

On the other hand, when the loss area is large, the contribution of the viscosity is so large that plastic deformation is increased. As a result of comprehensive regulation of the above various properties of lens, the relaxation is suppressed by enhancing the crosslinking density (imparting restorability) to suppress plastic deformation and introducing a stiff straight chain to improve refractive index. That is, the upper limit value of the loss tangent is determined by the suppression of the relaxation.

As described above, in the present invention, it was found that when the loss tangent value at a predetermined temperature is a given value or larger, the scratch resistance can be improved. Specifically, in order to maintain scratch resistance over a wide temperature range and over a wide vibration frequency range, the loss area in a temperature range of -20 to 50°C should be 20°C or above, preferably 20 to 43.2°C, particularly preferably 20 to 31.7°C. The loss area refers to an area of a loss tangent peak in a curve for dependency of loss tangent upon temperature and can be calculated by integrating the curve with respect to a predetermined temperature range.

The optical element prepared using the above resin composition preferably has a refractive index of not less than 1.52. As described above, the refractive index may be mentioned as one of characteristics required of an optical element. In order to enhance the refractive index, a benzene ring should be introduced into a compound constituting the resin composition. However, there is a trade-off relationship between an improvement in refractive index and the flexibility of the resin. The optical resin prepared using the resin composition according to the present invention has a refractive index of not less than 1.52. For the optical resin composition having this refractive index, the crosslinking density, the toughness, and the refractive index can be regulated by incorporating, in a compound having a structure containing two benzene rings such as bisphenol A, a predetermined amount of an ethylene oxide (EO)-modified diacrylate monomer for toughness impartation purposes. When the regulation of the refractive index only is contemplated, this can be achieved by incorporating a predetermined amount of phenoxyethyl acrylate, phenoxyethyl EO-modified acrylate, 2-hydroxy-3-phenoxypropyl acrylate, p-cumyl phenol EO-modified acrylate, p-cumylphenoxyethylene glycol acrylate, bisphenol A epoxy acrylate or the like.

In the resin composition according to the present invention, urethane acrylates usable with the above compound include: a polyester-type urethane acrylate produced by reacting an isocyanate compound, such as toluene diisocyanate (TDI), hexamethylene diisocyanate (HMDI), methylene diisocyanate (MDI), or isophorone diisocyanate (IPDI), with a polybasic acid such as phthalic acid, adipic acid, glutaric acid, or caprolactone, and a polyhydric alcohol such as ethylene glycol, bisphenol A, diethylene glycol, triethylene glycol, neopentyl glycol, 1,4-butanediol, or 3-methyl-1,5-pentanediol and a hydroxyl-containing (meth)acrylate; and a polyether-type urethane acrylate produced by reacting an isocyanate with a polyether polyol such as polyethylene glycol, polypropylene glycol, or polytetramethylene glycol, and a polyether glycol and a hydroxyl-containing (meth)acrylate. When the refractive index is brought to 1.52 to 1.55 or more, the content of the benzene ring in the compound used should be increased. In this case, however, when the content of the benzene ring is increased, the flexibility of the resin composition is lost. Therefore, a compound having a viscous structure such as ethylene oxide should be incorporated in the above compound.

More preferably, the optical element resin composition according to the present invention has a coefficient of dynamic friction of 0.07 to 0.15 at room temperature. When the resin composition having the above coefficient of dynamic friction is used, the occurrence of scratches during the transportation, particularly under a low-temperature environment around -20°C, can be effectively prevented. Here room temperature refers to 25°C. However, it should be noted that, even at -20°C, the value of the coefficient of dynamic friction remains substantially unchanged. When the value of the coefficient of dynamic friction exceeds 0.15, the occurrence of scratches caused during transportation at a temperature around -20°C cannot be effectively prevented. On the other hand, when the value of the coefficient of dynamic friction is less than 0.07, in order to impart slipperiness, the amount of silicone or the like added should be considerably increased. When the amount of the slip agent added is increased, during use in various temperature environments, particularly during use in a high temperature environment, the slip agent is likely to bleed out to the outside of the lens. Further, the optical performance of the optical element and the adhesion between the lens and the substrate are deteriorated.

In order to bring the value of coefficient of dynamic friction to 0.07 to 0.15, a slip agent is preferably incorporated in the resin composition. Preferred slip agents include one which does not cause any optical defect in the resin composition, for example, does not cause lowered transmittance and bleed-out of the slip agent in a high-temperature environment test, one which causes migration to the surface during molding, but on the other hand, is less likely to bleed out after curing, one in which the refractive index is as close as possible to the refractive index of the resin composition, or one which, in the case of a particulate slip agent (silica) or the like, has a particle diameter of not more than the wavelength of light.

Further, preferably, the additive per se has low viscosity, and, upon deposition on the substrate side, leveling can be easily carried out, or the refractive index is close to that of the substrate. Furthermore, preferably, the additive does not sacrifice the adhesion of the resin composition to the substrate.

Preferred slip agents of this type include silicones and silicone polymers. The slip agent is preferably modified silicone, more preferably polyether-modified polydimethylsiloxane. When lens sheets are formed by curing the resin composition containing the above additive, the occurrence of scratches on the surface of lenses by friction between the lens sheets can be reduced.

The content of the additive in the whole resin composition is preferably 0.01 to 10% by weight. When the additive content is less than 0.01% by weight, predetermined slipperiness cannot be provided. On the other hand, when the additive content exceeds 10% by weight, the material properties of the resin composition are deteriorated.

Specific examples of silicones and silicone polymers usable herein include: BYK-307, BYK-333, BYK-332, BYK-331, BYK-345, BYK-348, BYK-370, and BYK-UV 3510, manufactured by Bik-Chemie Japan K.K.; X-22-2404, KF-62-7192, KF-615A, KF-618, KF-353, KF-353A, KF-96, KF-54, KF-56, KF-410, KF-412, HIVACF-4, HIVACF-5, KF-945A, KF-354, and KF-353, manufactured by The Shin-Etsu Chemical Co., Ltd.; SH-28PA, SH-29PA, SH-190, SH-510, SH-550, SH-8410, SH-8421, SYLGARD309, BY16-152, BY16-152B, and BY16-152C, manufactured by Dow Corning Toray Japan Co., Ltd.; FZ-2105, FZ-2165, FZ-2163, L-77, L-7001, L-7002, L-7604, and L-7607, manufactured by Nippon Unicar Co., Ltd.; EFKA-S018, EFKA-3033, EFKA-83, EFKA-3232, EFKA-3236, and EFKA-3239, manufactured by EFKA Additives; and GLANOL 410 manufactured by Kyoeisha Chemical Co., Ltd.

In order to avoid bleedout of the silicone component with the elapse of time upon a change in environment after curing of the resin, a reactive silicone such as silicone acrylate or silicone methacrylate may be used as an auxiliary additive in combination with the above additive. Specific examples of reactive silicones usable herein include: BYK-UV 3500 and BYK-UV 3530, manufactured by Bik-Chemie Japan K.K.; Bentad UV-31 manufactured by Nippon Konica Co., Ltd.; and X-24-8201, X-22-174DX, X-22-2426, X-22-2404, X-22-164A, X-22-164B, and X-22-164C, manufactured by The Shin-Etsu Chemical Co., Ltd.

Examples of commercially available products of silica particles include: SUNSPHERE NP-100 and SUNSPHERE NP-200, manufactured by Dohkai Chemical industries Co.,Ltd.; SILSTAR MK-08 and SILSTAR MK-15, manufactured by Nippon Chemical Industrial CO., LTD.; FB-48 manufactured by Denki Kagaku Kogyo K.K.; and Nipsil E220A manufactured by Nippon Silica industrial Co., Ltd.

EXAMPLES

Various resin compositions were used to prepare samples which were then measured for the above-described various parameters. Further, samples were used to prepare Fresnel lens sheets which were then evaluated for practicality. The results of measurement of the parameters and the results of evaluation of the practicality are shown in Tables 1 to 5. The measured parameters are refractive index, glass transition temperature, equilibrium modulus of elasticity, elastic deformation rate, compression modulus of elasticity, maximum deformation level, residual deformation level, restoring speed, creep deformation rate, storage modulus at -20°C, loss tangent at various temperatures, loss area, and coefficient of dynamic friction.

The evaluated items are a TV setting collapse test, a loading test, and a vibration test at various temperatures. The evaluation results are shown in Tables 1 to 5. In the tables, for items in which the measurement temperature is not indicated, the results are those measured at 25°C.

Resin compositions A1 to A22 described in the evaluation results correspond to examples of the optical element resin composition according to the present invention, and resins B1 to B27 correspond to comparative optical element resin compositions.

Table 1

| | Resin A1 | Resin A2 | Resin A3 | Resin A4 | Resin A5 | Resin A6 | Resin A7 | Resin A8 | Resin A9 | Resin A10 |
|---|---|---|---|---|---|---|---|---|---|---|
| Refractive index (D line) | 1.551 | 1.551 | 1.552 | 1.553 | 1.552 | 1.551 | 1.551 | 1.551 | 1.549 | 1.549 |
| Compression modulus of elasticity (Mpa) | 95.29 | 136.3 | 118.8 | 148.7 | 112.9 | 625.1 | 489.1 | 1171.3 | 842.5 | 603.4 |
| Elastic deformation rate (%) | 45.869 | 47.72 | 44.65 | 31.35 | 45.43 | 22.43 | 19.16 | 18.85 | 34.3 | 36.86 |
| Crosslinking density (dyne/cm²) (1 Hz: 80°C) | 1.01E+8 | 1.15E+8 | 1.18E+8 | 0.97E+8 | 1.58E+8 | 1.31E+8 | 1.07E+8 | 1.29E+8 | 1.77E+8 | 1.44E+8 |
| Glass transition temp. (Tp) | 22.6 | 19.5 | 22.9 | 23.7 | 22.2 | 29.8 | 34.5 | 30.6 | 27.1 | 23.9 |
| Creep deformation rate (%) | 8.859 | 10.92 | 14.43 | 24.88 | 16.75 | 36.91 | 62.99 | 49.37 | 26.59 | 17.90 |
| Maximum deformation level (μm) | 7.94 | 6.71 | 7.543 | 9.13 | 7.505 | 4.23 | 6.04 | 3.39 | 3.83 | 2.85 |
| Restoring speed (μm/sec) | 1.13 | 0.921 | 1.01 | 0.788 | 1.07 | 0.206 | 0.223 | 0.0963 | 0.193 | 0.274 |
| Residual deformation level (μm) | 0.523 | 0.721 | 0.889 | 1.668 | 0.477 | 1.058 | 2.256 | 1.011 | 0.975 | 0.429 |
| Tan δ (10 Hz) at 25°C | 1.1129 | 1.0447 | 1.06457 | 0.88976 | 1.0217 | 0.5052 | 0.2631 | 0.4393 | 0.413 | 0.652 |
| 0°C | 0.0556 | 0.0412 | 0.04374 | 0.0402 | 0.0396 | 0.0671 | 0.0847 | 0.0625 | 0.0938 | 0.125 |
| -20°C | 0.0183 | 0.0113 | 0.01374 | 0.01285 | 0.0139 | 0.0235 | 0.0352 | 0.0245 | 0.0275 | 0.0321 |
| LA (loss area) | 31.7 | 22.7 | 29.4 | 29.5 | 24.6 | 27.84 | 29.02 | 28.41 | 26.05 | 27.74 |
| Storage modulus (dyne/cm²) (10 Hz: -20°C) | 4.21E+10 | 2.05E+10 | 4.51E+10 | 3.26E+10 | 2.96E+10 | 2.58E+10 | 2.52E+10 | 2.60E+10 | 2.66E+10 | 2.44E+10 |
| Coefficient of dynamic friction | 0.08 | 0.14 | 0.14 | 0.13 | 0.09 | 0.10 | 0.09 | 0.11 | 0.16 | 0.11 |
| TV setting collapse test | ○ | ○ | ○ | △ | ○ | △ | △ | △ | ○ | ○ |
| Loading test (20 g/cm²) | ○ | ○ | ○ | △ | ○ | × | × | × | △ | △ |
| Vibration test at 25°C (10 cycles) | ○ | ○ | ○ | ○ | ○ | ○ | ○ | ○ | ○ | ○ |
| 0°C (5 cycles) | ○ | ○ | ○ | ○ | ○ | ○ | ○ | ○ | ○ | ○ |
| -20°C (3 cycles) | △ | △ | × | × | △ | ○ | ○ | ○ | △ | ○ |

Table 2

| | Resin A11 | Resin A12 | Resin A13 | Resin A14 | Resin A15 | Resin A16 | Resin A17 | Resin A18 | Resin A19 | Resin A20 | Resin A21 | Resin A22 |
|---|---|---|---|---|---|---|---|---|---|---|---|---|
| Refractive index (D line) | 1.551 | 1.548 | 1.549 | 1.551 | 1.551 | 1.549 | 1.550 | 1.551 | 1.550 | 1.520 | 1.550 | 1.520 |
| Compression modulus of elasticity (Mpa) | 535.0 | 127.40 | 164.24 | 200.4 | 187.86 | 226.7 | 317.62 | 497.96 | 123.96 | 212.97 | 133.2 | 290.79 |
| Elastic deformation rate (%) | 33.89 | 60.56 | 52.244 | 47.239 | 46.08 | 50.52 | 44.957 | 24.92 | 54.925 | 61.004 | 33.984 | 61.037 |
| Crosslinking density (dyne/cm$^2$) (1 Hz: 80°C) | 1.43E + 8 | 1.47E + 8 | 1.56E + 8 | 1.39E + 8 | 1.67E + 8 | 1.58E + 8 | 2.33E + 8 | 0.859E + 8 | 1.37E + 8 | 2.22E + 8 | 2.02E + 7 | 3.09E + 8 |
| Glass transition temp. (Tp) | 27.0 | 18.0 | 21.2 | 23.7 | 23.6 | 26.9 | 26.9 | 35.0 | 17.0 | 5.0 | 37.5 | 5.5 |
| Creep deformation rate (%) | 25.44 | 10.216 | 13.146 | 15.771 | 19.932 | 18.94 | 26.742 | 45.198 | 15.56 | 14.71 | 26.81 | 15.89 |
| Maximum deformation level (μm) | 3.31 | 5.69 | 4.85 | 5.012 | 5.420 | 4.467 | 3.903 | 4.627 | 6.159 | 3.963 | 10.1 | 3.20 |
| Restoring speed (μm/sec) | 0.29 | 1.02 | 0.94 | 0.634 | 0.691 | 0.579 | 0.435 | 0.176 | 0.904 | 0.646 | 1.28 | 0.523 |
| Residual deformation level (μm) | 0.518 | 0.245 | 0.272 | 0.480 | 0.501 | 0.419 | 0.4978 | 1.964 | 0.471 | 0.278 | 1.35 | 0.139 |
| Tan δ (10 Hz) at | | | | | | | | | | | | |
| 25°C | 0.591 | 0.616 | 0.616 | 0.542 | 0.501 | 0.487 | 0.372 | 0.352 | 0.538 | 0.274 | 0.408 | 0.243 |
| 0°C | 0.118 | 0.172 | 0.159 | 0.153 | 0.156 | 0.1331 | 0.119 | 0.078 | 0.135 | 0.273 | 0.065 | 0.231 |
| -20°C | 0.0326 | 0.0393 | 0.0367 | 0.041 | 0.0379 | 0.0403 | 0.0344 | 0.025 | 0.025 | 0.155 | 0.0438 | 0.1411 |
| LA (loss area) | 27.68 | 25.97 | 26.40 | 26.06 | 25.13 | 25.67 | 23.01 | 28.34 | 25.33 | 21.96 | 29.02 | 20.13 |
| Storage modulus (dyne/cm$^2$) (10 Hz: -20°C) | 2.59E + 10 | 2.09E + 10 | 2.32E + 10 | 1.41E + 10 | 9.12E + 9 | 9.76E + 9 | 2.27E + 10 | 2.24E + 10 | 1.37E + 10 | 2.20E + 10 | 1.57E + 10 | 1.73E + 10 |
| Coefficient of dynamic friction | 0.08 | 0.10 | 0.10 | 0.10 | 0.18 | 0.19 | 0.15 | 0.07 | 0.09 | 0.09 | 0.15 | 0.10 |
| TV setting collapse test | O⁻ | O | O | O | O | O | O | △ | O | O | △ | O |
| Loading test (20 g/cm$^2$) | △ | O | O | O | O | O | O | x | O | O | O | O |
| Vibration test at | | | | | | | | | | | | |
| 25°C (10 cycles) | O | O | O | O | O | O | O | O | O | O | O | O |
| 0°C (5 cycles) | O | O | O | O | △ | △ | O | O | O | O | O | O |
| -20°C (3 cycles) | O | O | O | O | x | x | O | O | O | O | O | O |

EP 1 484 621 A1

Table 3

| | Resin B1 | Resin B2 | Resin B3 | Resin B4 | Resin B5 | Resin B6 | Resin B7 | Resin B8 | Resin B9 |
|---|---|---|---|---|---|---|---|---|---|
| Refractive index (D line) | 1.552 | 1.551 | 1.553 | 1.551 | 1.549 | 1.549 | 1.552 | 1.551 | 1.550 |
| Compression modulus of elasticity (Mpa) | 376.6 | 95.44 | 188.7 | 323.3 | 144.0 | 172.5 | 411.85 | 548.75 | 210.5 |
| Elastic deformation rate (%) | 15.47 | 21.39 | 21.77 | 26.05 | 40.72 | 34.68 | 26.895 | 33.035 | 23.58 |
| Crosslinking density (dyne/cm$^2$) (1 Hz: 80°C) | 0.545E + 8 | 0.346E + 8 | 0.33E + 8 | 0.598E + 8 | 0.516E + 8 | 0.592E + 8 | 3.39E + 7 | 9.72E + 7 | 8.18E + 7 |
| Glass transition temp. (Tp) | 29.2 | 25.6 | 23.8 | 23.8 | 18.9 | 18.5 | 40.9 | 43.4 | 34.6 |
| Creep deformation rate (%) | 40.3 | 32.43 | 28.54 | 22.3 | 10.15 | 13.27 | 31.531 | 37.216 | 58.421 |
| Maximum deformation level (μm) | 8.016 | 15.72 | 21.82 | 5.79 | 6.73 | 6.99 | 6.81 | 5.19 | 9.069 |
| Restoring speed (μm/sec) | 0.256 | 0.955 | 1.42 | 0.411 | 0.793 | 0.701 | 0.412 | 0.220 | 0.541 |
| Residual deformation level (μm) | 2.077 | 1.346 | 2.204 | 0.780 | 0.386 | 0.598 | 3.452 | 3.000 | 1.371 |
| Tan δ (10 Hz) at<br>25°C<br>0°C<br>-20°C | 0.63<br>0.0634<br>0.0242 | 0.96<br>0.043<br>0.0195 | 1.144<br>0.0443<br>0.0185 | 1.1845<br>0.0532<br>0.0225 | 1.2441<br>0.1415<br>0.0348 | 1.5321<br>0.0861<br>0.0237 | 0.2206<br>0.089<br>0.0692 | 0.2040<br>0.1036<br>0.0792 | 0.6331<br>0.1026<br>0.0312 |
| LA (loss area) | 34.65 | 37.51 | 37.94 | 33.59 | 33.92 | 33.04 | 27.00 | 28.77 | 28.71 |
| Storage modulus (dyne/cm$^2$) (10 Hz: -20°C) | 2.89E + 10 | 2.87E + 10 | 2.98E + 10 | 2.96E + 10 | 2.60E + 10 | 1.49E + 10 | 8.02E + 9 | 2.02E + 10 | 3.19E + 10 |
| Coefficient of dynamic friction | 0.12 | 0.12 | 0.11 | 0.07 | 0.11 | 0.11 | 0.15 | 0.14 | 0.14 |
| TV setting collapse test | x | x | x | x | x | x | x | x | △ - |
| Loading test (20 g/cm$^2$) | x | x . | x | x | x | x | x | x | x |
| Vibration test at<br>25°C (10 cycles)<br>0°C (5 cycles)<br>-20°C (3 cycles) | △<br>△<br>x | △<br>△<br>x | △<br>△<br>x | △<br>O<br>O | O<br>O<br>△ | O<br>△<br>x | △<br>O<br>O | △<br>△<br>△ | O<br>△<br>x |

EP 1 484 621 A1

Table 4

| | Resin B10 | Resin B11 | Resin B12 | Resin B13 | Resin B14 | Resin B15 | Resin B16 | Resin B17 | Resin B18 |
|---|---|---|---|---|---|---|---|---|---|
| Refractive index (D line) | 1.551 | 1.551 | 1.551 | 1.551 | 1.551 | 1.551 | 1.551 | 1.551 | 1.551 |
| Compression modulus of elasticity (Mpa) | 1167.5 | 995.56 | 1167.5 | 384.37 | 221.73 | 265.3 | 1160.2 | 92.4 | 135.5 |
| Elastic deformation rate (%) | 11.79 | 14.78 | 11.79 | 14.626 | 22.45 | 19.04 | 22.79 | 28.17 | 28.02 |
| Crosslinking density (dyne/cm$^2$) (1 Hz: 80°C) | 6.71E + 7 | 5.59E + 7 | 4.33E + 7 | 1.23E + 7 | 6E + 7 | 7.87E + 7 | 4.63E + 7 | 2.78E + 7 | 6.57E + 7 |
| Glass transition temp. (Tp) | 38.3 | 35.5 | 31.6 | 34.8 | 29.4 | 31.5 | 34.7 | 25.3 | 24.7 |
| Creep deformation rate (%) | 73.501 | 51.414 | 73.501 | 51.819 | 30.33 | 47.15 | 32.07 | 19.05 | 19.59 |
| Maximum deformation level (μm) | 10.62 | 5.51 | 6.77 | 8.77 | 8.27 | 8.87 | 2.64 | 11.71 | 9.12 |
| Restoring speed (μm/sec) | 0.201 | 0.103 | 0.203 | 0.232 | 0.506 | 0.401 | 0.102 | 0.963 | 0.73 |
| Residual deformation level (μm) | 6.298 | 3.08 | 2.22 | 4.27 | 1.269 | 1.769 | 1.203 | 1.256 | 1.051 |
| Tan δ (10 Hz) at 25°C 0°C -20°C | 0.3649 0.0386 0.0220 | 0.3372 0.1118 0.1082 | 0.4337 0.0849 0.0673 | 0.308 0.088 0.0611 | 0.7416 0.071 0.0577 | 0.4503 0.0505 0.0214 | 0.3757 0.074 0.0412 | 0.9420 0.0536 0.0178 | 1.0456 0.0609 0.0228 |
| LA (loss area) | 32.13 | 36.46 | 41.51 | 43.16 | 33.23 | 30.02 | 31.56 | 35.47 | 33.10 |
| Storage modulus (dyne/cm$^2$) (10 Hz: -20°C) | 2.76E + 10 | 1.51E + 10 | 1.61E + 10 | 1.62E + 10 | 2.65E + 10 | 3.47E + 10 | 1.64E + 10 | 2.46E + 10 | 3.60E + 10 |
| Coefficient of dynamic friction | 0.13 | 0.22 | 0.13 | 0.14 | 0.14 | 0.15 | 0.12 | 0.12 | 0.15 |
| TV setting collapse test | x | x | x | x | x | x | x | x | x |
| Loading test (20 g/cm$^2$) | x | x | x | x | x | x | x | x | x |
| Vibration test at 25°C (10 cycles) 0°C (5 cycles) -20°C (3 cycles) | △ △ △ | x x x | x △ △ | △ △ △ | △ △ △ | △ △ x | O △ △ | △ △ x | O x x |

Table 5

| | Resin B19 | Resin B20 | Resin B21 | Resin B22 | Resin B23 | Resin B24 | Resin B25 | Resin B26 | Resin B27 |
|---|---|---|---|---|---|---|---|---|---|
| Refractive index (D line) | 1.551 | 1.551 | 1.551 | 1.551 | 1.551 | 1.551 | 1.551 | 1.551 | 1.551 |
| Compression modulus of elasticity (Mpa) | 95.54 | 87.78 | 121.12 | 170.68 | 192.13 | 254.1 | 111.46 | 167.66 | 132.85 |
| Elastic deformation rate (%) | 35.34 | 34.67 | 25.90 | 25.07 | 26.73 | 22.86 | 28.17 | 22.50 | 32.13 |
| Crosslinking density (dyne/cm$^2$) (1 Hz: 80°C) | 3.70E + 7 | 3.56E + 7 | 5.98E + 7 | 4.62E + 7 | 2.69E + 7 | 3.51E + 7 | 3.79E + 7 | 6.47E + 7 | 6.77E + 7 |
| Glass transition temp. (Tp) | 24.8 | 25.5 | 28.5 | 25.3 | 25.2 | 29.2 | 26.6 | 25.9 | 25.7 |
| Creep deformation rate (%) | 14.06 | 17.12 | 27.40 | 25.62 | 20.73 | 27.80 | 20.78 | 29.29 | 18.51 |
| Maximum deformation level (μm) | 6.37 | 10.35 | 10.54 | 8.768 | 7.647 | 7.209 | 10.587 | 9.788 | 8.444 |
| Restoring speed (μm/sec) | 0.473 | 1.03 | 0.733 | 0.603 | 0.595 | 0.438 | 0.789 | 0.600 | 0.766 |
| Residual deformation level (μm) | 1.017 | 0.759 | 1.376 | 1.319 | 0.938 | 1.225 | 1.017 | 1.556 | 0.822 |
| Tan δ (10 Hz) at | | | | | | | | | |
| 25°C | 0.8175 | 0.8491 | 0.7173 | 0.7511 | 0.8156 | 0.6458 | 0.984 | 0.786 | 0.8511 |
| 0°C | 0.0958 | 0.1167 | 0.1314 | 0.0932 | 0.1063 | 0.049 | 0.0899 | 0.085 | 0.1154 |
| -20°C | 0.0268 | 0.0400 | 0.1021 | 0.0309 | 0.0347 | 0.0205 | 0.0277 | 0.0316 | 0.0340 |
| LA (loss area) | 31.57 | 34.00 | 31.98 | 33.29 | 32.54 | 33.28 | 33.73 | 32.26 | 32.33 |
| Storage modulus (dyne/cm$^2$) (10 Hz: -20°C) | 1.57E + 10 | 3.50E + 10 | 1.88E + 10 | 2.36E + 10 | 1.37E + 10 | 3.38E + 10 | 3.32E + 10 | 3.89E + 10 | 3.74E + 10 |
| Coefficient of dynamic friction | 0.14 | 0.13 | 0.20 | 0.18 | 0.15 | 0.14 | 0.15 | 0.14 | 0.14 |
| TV setting collapse test | △ | △ | x | x | x | x | x | x | x |
| Loading test (20 g/cm$^2$) | x | x | x | x | x | x | x | x | x |
| Vibration test at | | | | | | | | | |
| 25°C (10 cycles) | O | O | x | △ | △ | △ | △ | △ | △ |
| 0°C (5 cycles) | O | △ | x | x | △ | x | x | x | x |
| -20°C (3 cycles) | O | x | x | x | O | x | x | x | x |

EP 1 484 621 A1

The evaluation and measurement for each item were carried out by the following methods.

Preparation of samples for measurement of dynamic viscoelasticity

Samples for the measurement of storage modulus, loss tangent, and equilibrium modulus of elasticity as dynamic viscoelasticity were prepared as follows. A stainless steel plate having a flat surface and controlled at 40 to 42°C was provided as a mold. Each resin composition regulated to 40 to 42°C was coated to a thickness of 200 $\mu$m onto the surface of the mold. Light was applied from a metal halide-type ultraviolet light lamp (manufactured by Japan Storage Battery Co., Ltd.) to the coating under conditions of integrated quantity of light 2000 mJ/cm$^2$ and peak illumination 250 mW/cm$^2$ to cure the resin composition. Thereafter, the cured product was separated. Thus, samples for measurement were prepared.

Preparation of samples for measurement of compression modulus of elasticity

Samples in a Fresnel lens form for the measurement of compression modulus of elasticity were prepared in the same manner as in the preparation of the samples for the measurement of dynamic viscoelasticity, except that a nickel mold having a surface shape which is the reverse of the shape of a Fresnel lens was used instead of the stainless steel plate having a flat surface.

Measurement of dynamic viscoelasticity

The samples thus obtained were molded into strips having a size of 30 mm $\times$ 3 mm $\times$ 0.2 mm. 0.05% load strain was applied to the samples with a dynamic viscoelasticity measuring device ("RHEOVIBRON," manufactured by Orientec Co. Ltd.), and the storage modulus and the loss tangent were measured. In the measurement, the frequency was 1 to 10 Hz, and the temperature range was -100 to 100°C (temperature rise rate 3°C/min). A curve for the dependency of storage modulus upon temperature and a curve for the dependency of loss tangent upon temperature were prepared using the measured data.
The storage modulus at 25°C (room temperature), 0°C, and -20°C was determined from the curve for the dependency of storage modulus upon temperature. Separately, a curve for the dependency of storage modulus upon temperature was prepared in the same manner as described just above, except that the frequency of force vibration was 1 Hz. The storage modulus at 80°C was determined as an equilibrium modulus of elasticity from the curve for the dependency of storage modulus upon temperature.
Further, the loss tangent at 25°C (room temperature), 0°C, and -20°C was determined from the curve for the dependency of loss tangent upon temperature.
The temperature in a peak position at 1 Hz of the loss tangent (tan$\delta$) was regarded as the glass transition temperature.

Measurement of coefficient of dynamic friction

Samples for the measurement of coefficient of dynamic friction were prepared in the same manner as in the preparation of the samples for the measurement of dynamic viscoelasticity, except that the thickness of the coating was 100 $\mu$m and, in the ultraviolet irradiation, the coating was covered with an acrylic plate. In the measurement, a surface property measuring device (HEIDON TRIBOGEAR TYPE: 14DR, manufactured by Shinto Scientific Company Ltd.) was used. A vertical load (a point pressure of 100 g) was applied with a ball indenter to the surface of the samples, and the ball indenter was slid on the surface of the sample at a speed of 300 mm/min to measure the coefficient of dynamic friction. The measurement was done five times, and the average of the measured values was regarded as the coefficient of dynamic friction. The value of the measurement load divided by the vertical load was regarded as the coefficient of dynamic friction.

Measurement of compression modulus of elasticity

A universal hardness test using an ultramicrohardness meter (H-100V, manufactured by Fischer, Germany) was applied to calculate the compression modulus of elasticity. Specifically, the load applied by an indenter was gradually increased to a predetermined value and was then gradually decreased to prepare a curve for the dependency of penetration depth upon load, and the results of the measurement were analyzed to calculate the compression modulus of elasticity. The indenter used was a tungsten carbide (WC) ball indenter having a diameter of 0.4 mm.
The curve for the dependency of penetration depth upon load is typically as shown in Fig. 2. At the outset, upon a gradual increase in load from load 0 (point a) to load f, deformation occurs, and the penetration depth of the indenter gradually increases. When increasing the load is stopped at a certain load value, penetration caused by plastic deformation is stopped (point b). Thereafter, the load value is allowed to remain unchanged, during which time the penetration depth continues to increase due to creep deformation and reaches point c which stops the retention of the load value. Thereafter, as the load is gradually decreased, the penetration depth decreases toward point d due to elastic deformation.

In this case, the maximum load value F, which is the load value at point b in Fig. 2, was set to 20 mN. The reason for this is as follows. In an actual projection screen, the actual measurement of the pressure of contact between the Fresnel lens sheet and the lenticular lens sheet is difficult. However, when the deformation level of the lens constituting the screen is about 10 μm on the outer peripheral part of the lens sheet which should satisfy a strict requirement, this deformation is acceptable from the viewpoint of lens performance. However, when the complexity of the measurement and the dispersion of data due to the difference in sectional form derived from the shape are taken into consideration, the measurement of the deformation around the center (0 to 100 mm) which is relatively flat in shape would be preferred. For this reason, since the load required for the conventional lens sheet to be deformed by 10 μm is about 20 mN, 20 mN was used as the maximum load value. The time for creep deformation was arbitrarily brought to 60 sec.

The procedure for determining the curve for the dependency of penetration depth upon load is as follows.

(1) The load value for compression is increased from 0 (zero) to 20 mN in 100 steps every 0.1 sec.
(2) The load value increased to 20 mN is maintained for 60 sec to cause creep deformation.
(3) The load value is decreased to 0.4 mN (lowest load in the tester) in 40 steps every 0.1 sec.
(4) The load value 0.4 mN is maintained for 60 sec to recover the penetration depth.
(5) The above steps (1) to (4) are repeated three times.

As shown in Fig. 3, the site on which the ball indenter is allowed to act is preferably around the center part in individual segmented lens surfaces constituting the Fresnel lens, for example, the center part in parts as indicated by 2c, 2c', and 2c''. When the spacing between adjacent concaves in the lens surface is pitch P, the center part is around a position corresponding to P/2. Also in the case of other lens shapes, the ball indenter is preferably allowed to act on a position around the center of individual lens surfaces constituting the lenses.

The compression modulus of elasticity (E) was determined by the following equation.

$$E = 1/(2(hr(2R - hr))^{1/2} \times H \times (\Delta H/\Delta f) - (1-n)/e)$$

wherein
"hr" represents penetration depth at an intersection of a tangential line with a penetration depth axis (an abscissa) in a curve, for the dependency of penetration depth upon load, in its load reduction zone when load f is a maximum value F (unit: mm);
"R" represents the radius (2R = 0.4 mm) of the ball indenter;
"H" represents the maximum value of penetration depth h (unit: mm);
"ΔH/Δf" represents the reciprocal of the slope of a curve, for the dependency of penetration depth upon load, in its load reduction zone when load f is a maximum value F;
"n" represents the Poisson's ratio of the material (WC) of the ball indenter (n = 0.22); and
"e" represents the modulus of elasticity of the material (WC) of the ball indenter (e = $5.3 \times 10^5$ N/mm$^2$).

As described above, increase/decrease of load and the like were repeated three times in the order of steps (1), (2), (3), and (4). In this case, for each time of repetition, a curve for the dependency of penetration depth upon load was determined, and, based on each of the curves, the compression modulus of elasticity (E) (unit: Mpa) was determined, and the average of the values was regarded as the compression modulus of elasticity.

Maximum deformation level and residual compression level

In measuring the compression modulus of elasticity, the deformation level at point c shown in Fig. 2 is defined as the maximum deformation level.

The deformation level at point e is defined as residual deformation level.

Restoring speed

The restoring speed is defined as follows.

$$V = \Delta h/\Delta t$$

wherein $\Delta h$ represents displacement level at point c in Fig. 2, that is, displacement level 2 sec after the maximum deformation (72 sec after the start of the test) ($\mu$m); and $\Delta t$ represents restoring time (sec).

Creep deformation rate

The creep deformation rate (C) was determined by the following equation.

$$C = (h2 - h1)\cdot100/h1$$

wherein h1 represents penetration depth when the load reaches a given testing load (20 mN in this case) (point b in Fig. 2) (unit: mm); and h2 represents penetration depth after a predetermined period of time (60 sec) has elapsed while holding the testing load (point c in Fig. 2) (unit: mm).

Elastic deformation rate

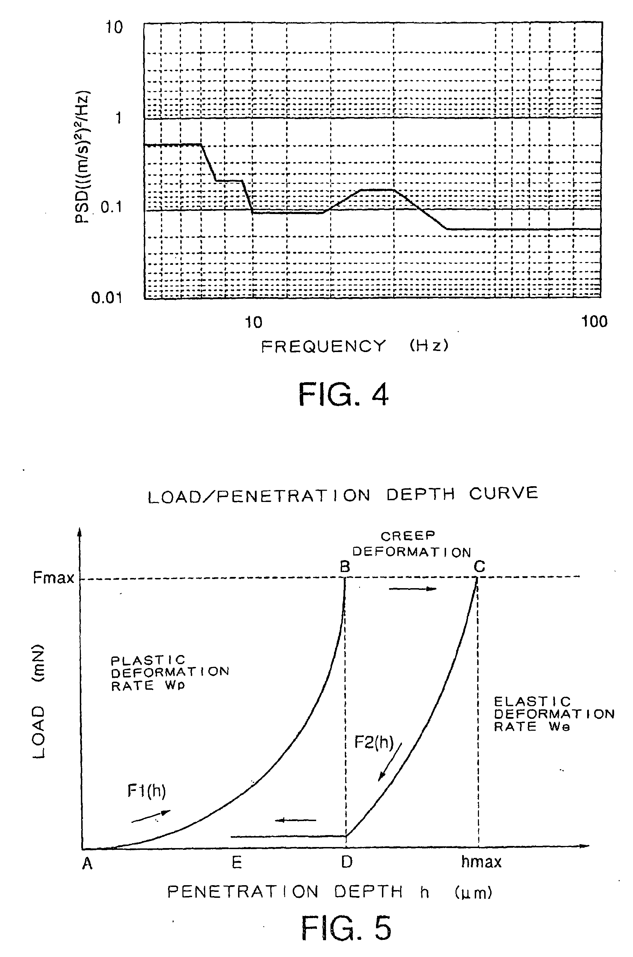

Fig. 5 is a graph showing a curve for the dependency of penetration depth upon load. The elastic deformation rate is the proportion of elastic deformation energy to total load energy and can be determined from the curve for the dependency of penetration depth upon load shown in Fig. 5. In Fig. 5,

A: initial state,
B: application of maximum load and maximum deformation,
B-C: creep deformation level,
D: after removal of load (to lowest load),
D-E: creep deformation level under lowest load,
E-A: residual deformation level, and
$h_{max}$-E: restored deformation level. In this case, the elastic deformation rate ($\eta$e) can be expressed by

$$\eta e = W_{elastic}/W_{total}$$

wherein

$$W_{total} = \int F1(h)dh,$$

and

$$W_{elastic} = \int F2(h)dh.$$

Loss area

In the measurement of dynamic viscoelasticity, the value obtained by integration in the temperature range of -20 to 50°C with respect to a curve for the dependency of loss tangent upon temperature at 10 Hz was regarded as loss area (°C).

TV setting collapse test

Fresnel lens sheets prepared by molding using the same resin compositions as those used for the measurement of the above compression modulus of elasticity (E) and the creep deformation rate (C) were placed so as to face a predetermined lenticular lens sheet, and the four sides of the assemblies were fixed by a tape, and the fixed assemblies were fitted into wood frames of individual television sizes, followed by mounting on televisions to visually observe and evaluate a white screen. After the elapse of one hr, when collapse of the Fresnel lens sheet was observed, the lens sheet was evaluated as "x," and, when collapse was not observed, the lens sheet was evaluated as "o." When

collapse on a slight level between Δ and o was observed, the lens sheet was evaluated as "o~."

Refractive index

Cured sheets prepared in the same manner as in the samples for dynamic viscoelasticity measurement were provided as samples. Each of the samples was brought into intimate contact with an Abbe's refractometer in its prism part using 1-bromonaphthalene, and the refractive index was measured with D line (λ = 589 nm) at a sample temperature of 25°C. (For others, the measurement was done according to JIS K 7105.)

Vibration test

A Fresnel lens sheet was brought into intimate contact with a lenticular lens sheet so that the lens surface in the Fresnel lens sheet faced the lens surface in the lenticular lens sheet. The four sides of the assembly were fixed by a pressure-sensitive adhesive tape, and the fixed assembly was fitted into a wood frame of TV screen size. This was set in a vibration tester (EDS 252, a vibration tester, manufactured by Akashi Corporation) installed within an environment test chamber kept at a constant temperature. Random waves having PSD (power spectrum density) waveform shown in Fig. 4 were used for vibration, and a vibration test corresponding to truck transportation of 5000 km was carried out by 10 cycles in the case of a temperature of 25°C, by 5 cycles in the case of a temperature of 0°C, and by 3 cycles in the case of a temperature of -20°C. In these cases, 1 cycle was 4320 sec.

The random wave is an indefinite wave having statistic properties which can be expressed by PSD function, and, in this vibration test, test conditions are determined using the function as an index. The reason why the random wave is used is that nonlinear elements of the vibration can be eliminated, that is, nonlinear elements by mounting of a projection screen, a packing form and the like can be eliminated, and the vibration of the object can be added under given conditions. Further, all the vibrations are different in any point of time base with the test start time being 0 (zero). Therefore, conditions which are closer to vibrations during actual transportation can be produced.

25°C (room temperature), 0°C, and -20°C were used as environmental temperatures. After the completion of the test, a screen of which the whole is white was projected by a projector to inspect the screen for uneven brightness. In this case, when uneven brightness attributable to friction between lenses was clearly observed, the lens sheet was evaluated as x; when uneven brightness was observed on a level that is inconspicuous, the lens sheet was evaluated as Δ; and, when uneven brightness was not observed, the lens sheet was evaluated as o.

Loading test

Fresnel lens sheets prepared by molding using the same resin compositions as those used for the measurement of the above compression modulus of elasticity and the creep deformation rate were placed so as to face a predetermined lenticular lens sheet, and the four sides of the assemblies were fixed by a tape, and the fixed assemblies were fitted into wood frames of individual television sizes, followed by mounting on televisions. A pressure of 40 g/cm$^2$ was applied to the lenses, and, in this state, the assemblies were allowed to stand for 10 days at room temperature. Thereafter, the load was released. After the release of the load, the white screen of TV was visually inspected and evaluated. When the shape of the lens was restored within 20 min after the release of the load and the collapse disappeared, the lens sheet was evaluated as "o"; when the shape of the lens was restored within 1 to 6 hr after the release of the load and the collapse disappeared, the lens sheet was evaluated as "Δ"; and when the collapse disappeared after the elapse of 6 hr or longer after the release of the load, or when the shape of the lens was not restored at all even after the elapse of 6 hr or longer after the release of the load, the lens sheet was evaluated as "x."

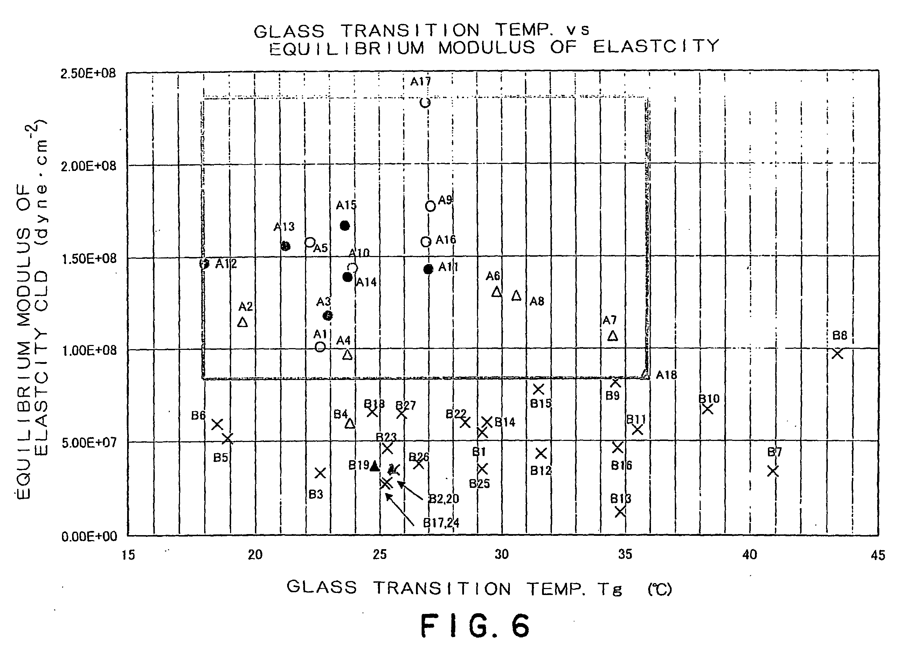

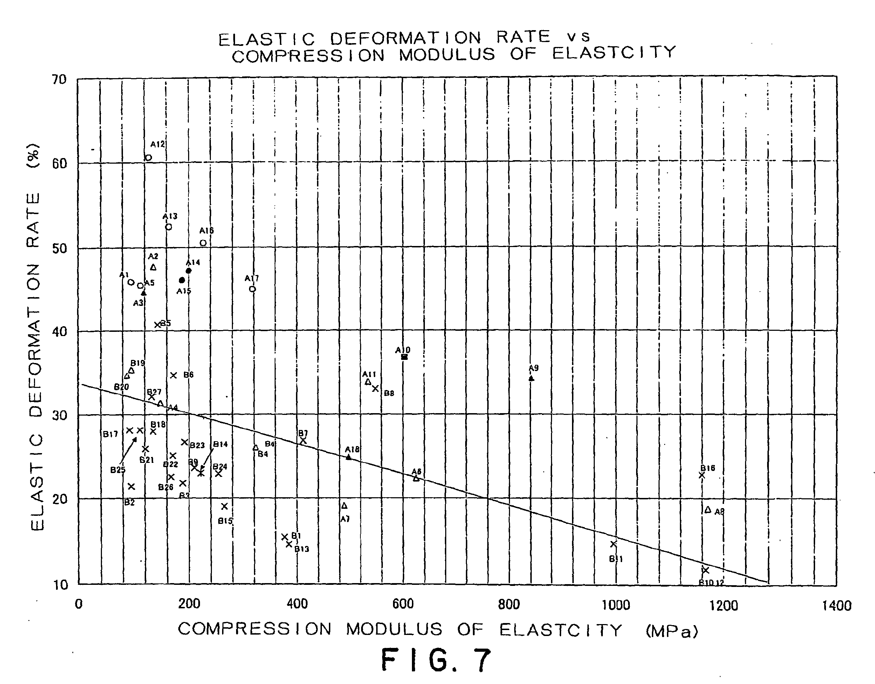

In the above evaluation results, for resin compositions A1 to A18 and B1 to B27, a graph in which data on the glass transition temperature (Tg) and the equilibrium modulus of elasticity (CLD) have been plotted is shown in Fig. 6. Further, a graph in which data on the elastic deformation rate (We) and the compression modulus of elasticity (E) for each resin composition have been plotted is shown in Fig. 7.

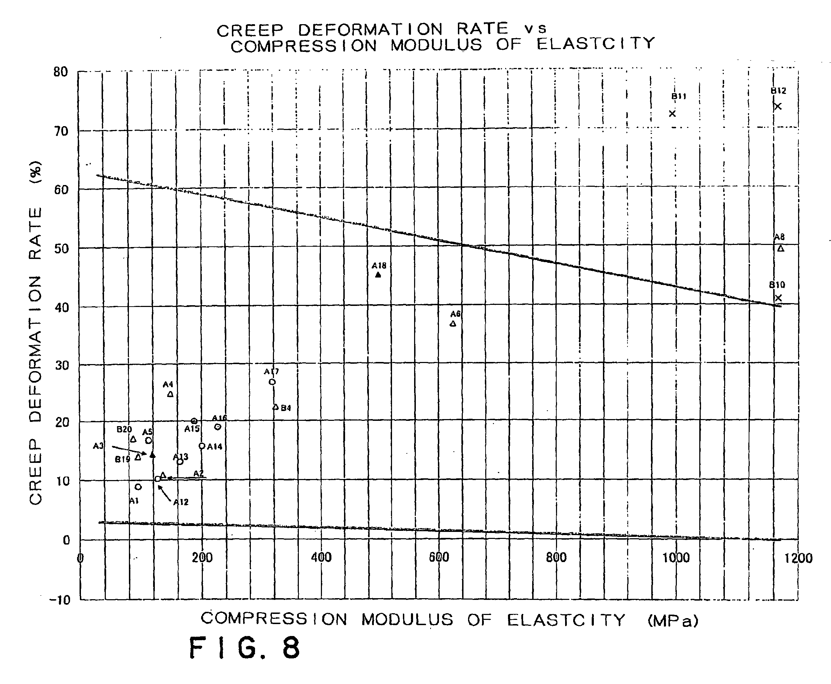

Furthermore, a graph in which data on the compression modulus of elasticity (E) and the creep deformation rate (C) for each resin composition have been plotted is shown in Fig. 8.

As is apparent from the evaluation results and each of the graphs, for resins A1 to A5, when the loss tangent (tanδ) at -20°C is less than 0.02 and transportation is made in such a state that optical element surfaces are in contact with each other in a low-temperature environment, scratches are likely to occur. (Vibration test)

When resin A2 is compared with resin A3, the storage modulus of resin A2 at -20°C is not more than 2.96 × 10$^{10}$ dyne/cm$^2$, whereas the storage modulus of resin A3 at -20°C is large and exceeds 2.96 × 10$^{10}$ dyne/cm$^2$. Therefore, for resin A3, when transportation is made in such a state that optical element surfaces are in contact with each other in a low-temperature environment, scratches are likely to occur. (Vibration test)

For resin A7, the relationship between the elastic deformation rate (We) and the compression modulus of elasticity (E) is We $\leq$ -0.0189E + 34.2 and does not satisfy the requirement specified in claim 2, and, thus, restorability of the lens from collapse caused by mutual compression of the lens surfaces is poor.

Further, for resin A8, the relationship between the compression modulus of elasticity (E) and the creep deformation rate (C) is outside the range specified in claim 6, and, thus, creep properties with respect to collapse caused by mutual compression of the lens surfaces are so poor that collapse disadvantageously occurs.

For resins A9, A15, and A16, the coefficient of dynamic friction is not in the range of 0.07 to 0.15 and is above the upper limit of this range, and, thus, scratches are likely to occur during transportation at a temperature around -20°C.

For resins A12, A13, A14, and A17, all the results of evaluation for the TV setting collapse test, the loading test, and the vibration test at various temperatures are good.

For resin A18, possibly because the glass transition temperature is the upper limit value 35°C, restorability of the lenses from collapse caused by mutual compression of the lens surfaces is somewhat poor.

When resins A9, A10, and A11 are compared with each other, it is apparent that, although they have similar material properties (for example, storage modulus at -20°C, elastic deformation rate, and compression modulus of elasticity), as the coefficient of dynamic friction increases, scratches are likely to occur during transportation at a temperature around -20°C.

For resins A11, A18, and B4, although the coefficient of dynamic friction is in the range of 0.07 to 0.15, the values are close to the lower limit of this range. Therefore, even when the results of evaluation for the TV setting collapse test and the loading test are not good, the occurrence of scratches during transportation can be prevented.

For resins B11 and B21, the coefficient of dynamic friction is not less than 0.20, and, hence, many scratches are likely to occur during transportation in a temperature range of room temperature to low temperatures.

For resin B19, according to the evaluation results, the occurrence of scratches during transportation in a temperature range of room temperature to low temperatures can be prevented most effectively. However, good results could not be obtained for the TV setting collapse test and the loading test.

When resin B23 is compared with resin B25, both the resins have an identical coefficient of dynamic friction of 0.15. They, however, are greatly different from each other in occurrence of scratches during transportation at a low temperature which is attributable to whether or not the storage modulus is not more than $2.96 \times 10^{10}$ dyne/cm$^2$. Specifically, for resin B23, it is considered that collapse occurs at room temperature to render the contact area so large that friction between the lenses is likely to occur (i.e., scratches are likely to occur), while, at a low temperature, the resin is so hard that the contact area is small and friction between the lenses is less likely to occur (i.e., scratches are less likely to occur).

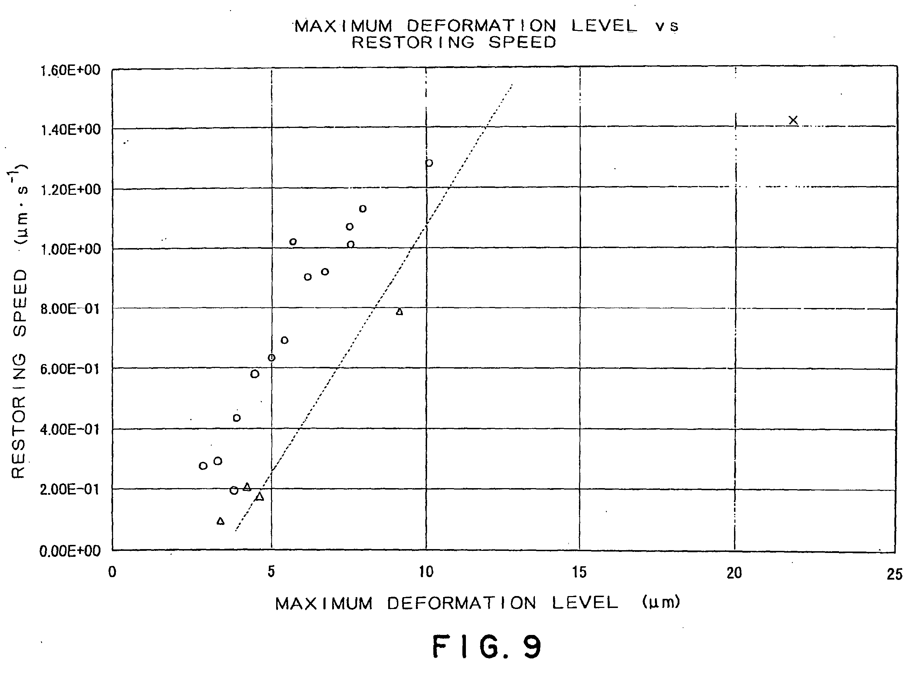

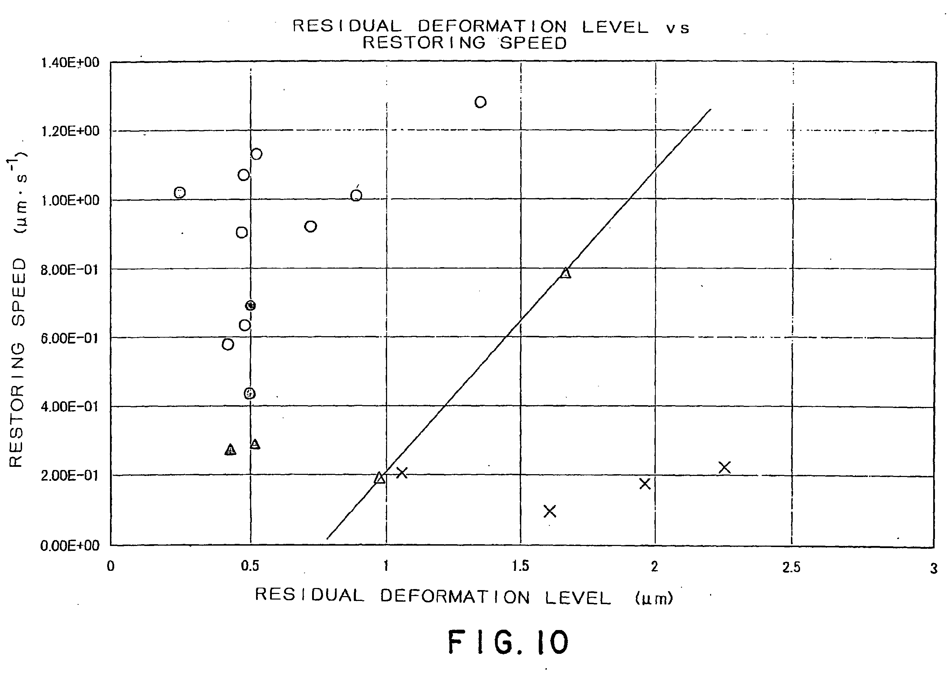

Fig. 9 is a graph in which the relationship between the maximum deformation level and the restoring speed for each resin composition has been plotted based on the evaluation results. Fig. 10 is a graph in which the relationship between the residual deformation level and the restoring speed for each resin composition has been plotted.

As shown in Fig. 9, resin compositions A19 to A22 satisfy a relationship represented by formula $V \geq 0.178DM - 0.852$ wherein V represents restoring speed, $\mu$m/sec, and DM represents maximum deformation level, $\mu$m, and provide good results in the loading test and the vibration test, indicating that collapse of the lens and friction between the lenses have been reduced.

As is apparent from Fig. 10, resin compositions A19 to A22 satisfy a relationship represented by formula $V \geq 0.858R - 0.644$ wherein V represents restoring speed, $\mu$m/sec, and R represents residual deformation level, $\mu$m, and provide good results in all the loading test and the TV setting collapse test, and are free from collapse of the lens, have a high level of lens shape restorability, and a high level of friction resistance.

**Claims**

1. An optical element resin composition for constituting an optical element, said resin composition having a glass transition temperature of 5 to 36°C and an equilibrium modulus of elasticity of $0.859 \times 10^8$ to $3.06 \times 10^8$ dyne/cm$^2$.

2. The optical element resin composition according to claim 1, which satisfies a relationship represented by formula We > -0.0189E + 34.2 wherein We represents elastic deformation rate in %; and E represents compression modulus of elasticity in Mpa.

3. The optical element resin composition according to claim 1, which satisfies a relationship represented by formula $V \geq 0.178DM - 0.852$ wherein V represents restoration speed in $\mu$m/sec; and DM represents maximum deformation level in $\mu$m.

4. The optical element resin composition according to claim 3, wherein the relationship to be satisfied is represented by formula $V \geq 0.112DM - 0.236$.

**5.** The optical element resin composition according to any one of claims 1 to 4, which satisfies a relationship represented by formula $V \geq 0.858R - 0.644$ wherein V represents restoration speed in $\mu$m/sec; and R represents residual deformation level in $\mu$m.

**6.** The optical element resin composition according to any one of claims 1 to 5, which satisfies a relationship represented by $(-0.026E + 3) < C < (-0.02E + 63)$ wherein C represents creep deformation rate in %; and E represents compression modulus of elasticity in Mpa.

**7.** The optical element resin composition according to claim 6, which has a storage modulus of not more than $2.96 \times 10^{10}$ dyne/cm$^2$ at -20°C and a loss tangent of not less than 0.02 at -20°C.

**8.** The optical element resin composition according to claim 7, wherein the loss area in a temperature range of -20 to 50°C in a curve for dependency of loss tangent upon temperature is 20°C or above.

**9.** The optical element resin composition according to any one of claims 1 to 8, which has a coefficient of dynamic friction of 0.07 to 0.15 at room temperature.

**10.** An optical element comprising the optical element resin composition according to any one of claims 1 to 9.

**11.** The optical element according to claim 10, wherein said optical element is a Fresnel lens sheet.

**12.** The optical element according to claim 11, which has a refractive index of not less than 1.52.

**13.** A projection screen comprising the optical element according to any one of claims 10 to 12 and a lenticular lens.

FIG. 1

FIG. 2

FIG. 3

FIG. 4

LOAD/PENETRATION DEPTH CURVE

FIG. 5

GLASS TRANSITION TEMP. vs
EQUILIBRIUM MODULUS OF ELASTCITY

FIG. 6

EP 1 484 621 A1

ELASTIC DEFORMATION RATE vs
COMPRESSION MODULUS OF ELASTCITY

FIG. 7

COMPRESSION MODULUS OF ELASTCITY (MPa)

ELASTIC DEFORMATION RATE (%)

27

CREEP DEFORMATION RATE vs
COMPRESSION MODULUS OF ELASTCITY

FIG. 8

EP 1 484 621 A1

MAXIMUM DEFORMATION LEVEL vs
RESTORING SPEED

FIG.9

RESIDUAL DEFORMATION LEVEL vs RESTORING SPEED

RESIDUAL DEFORMATION LEVEL (μm)

RESTORING SPEED (μm·s⁻¹)

FIG. IO

## INTERNATIONAL SEARCH REPORT

| International application No. |
| --- |
| PCT/JP03/01888 |

| A. CLASSIFICATION OF SUBJECT MATTER |
| --- |
| Int.Cl⁷ G02B1/04, G02B3/00 |

According to International Patent Classification (IPC) or to both national classification and IPC

| B. FIELDS SEARCHED |
| --- |
| Minimum documentation searched (classification system followed by classification symbols) |
| Int.Cl⁷ G02B1/04, G02B3/00 |

Documentation searched other than minimum documentation to the extent that such documents are included in the fields searched

| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 03-273043 A (Mitsui Petrochemical Industries, Ltd.), 04 December, 1991 (04.12.91), Page 15, upper left column, lines 4 to 12 (Family: none) | 1-13 |
| Y | EP 485197 A1 (NESTLE SA), 13 May, 1992 (13.05.92), Full text; all drawings & JP 04-292609 A | 1-13 |
| Y | EP 629493 A1 (ROHM AND HAAS CO.), 21 December, 1994 (21.12.94), Page 3, lines 33 to 41; page 7, lines 30 to 41 & JP 09-174647 A | 1-13 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17 March, 2003 (17.03.03) | 01 April, 2003 (01.04.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

EP 1 484 621 A1

## INTERNATIONAL SEARCH REPORT

International application No.

PCT/JP03/01888

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-228549 A (Dainippon Printing Co., Ltd.), 24 August, 2001 (24.08.01), Full text; all drawings (Family: none) | 1-13 |
| Y | EP 1014113 A2 (DSM N.V., JSR Corp., Japan Fine Coatings Co., Ltd.), 28 June, 2000 (28.06.00), Full text; all drawings & JP 2000-239333 A | 1-13 |
| Y | EP 195355 A2 (Toray Silicone Co., Ltd.), 24 September, 1986 (24.09.86), Page 7, lines 6 to 19; page 11, lines 1 to 35 & JP 61-207463 A | 1-13 |
| Y | JP 03-281511 A (Mitsubishi Rayon Co., Ltd.), 12 December, 1991 (12.12.91), Full text; all drawings (Family: none) | 1-13 |

Form PCT/ISA/210 (continuation of second sheet) (July 1998)

32